# EUROPEAN PATENT SPECIFICATION

(11) **EP 3 086 680 B1**
(45) Date of publication and mention of the grant of the patent: **19.12.2018**
(21) Application number: 14874927.8
(22) Date of filing: 23.12.2014
(51) Int. Cl.: A43B 21/24, A43D 3/02, A43B 7/04, A43B 3/00, A43B 13/12, B29D 35/12

(54) **A FOOTWEAR HEEL**
SCHUHABSATZ
TALON DE CHAUSSURE

(30) Priority: 24.12.2013 AU 2013905073
(43) Date of publication of application: 02.11.2016
(73) Proprietor: Normac Trading Pty Ltd., Preston, Victoria 3072 (AU)
(72) Inventor: MCLEOD, Norman, William, East Hawthorn, Victoria 3123 (AU); SUHR, Mark, Gerard, Hawthorn, Victoria 3122 (AU)
(74) Representative: J A Kemp
(86) International application number: PCT/AU2014/001163
(87) International publication number: WO 2015/095917

(56) References cited:
- WO-A1-2013/015179
- US-A- 1 085 254
- US-A- 4 217 081
- US-A- 5 732 486
- US-A1- 2007 193 064
- US-A1- 2009 313 857
- US-A1- 2010 095 555
- US-A1- 2012 023 785
- US-A1- 2013 020 986
- US-A1- 2013 174 448

## Description

The application claims priority from Australian Provisional Patent Application no. 2013905073 filed 24 December 2013.

### Technical Field

The present invention relates to footwear, and more particularly to an arrangement allowing an item to be stored within the foot. The invention has been particularly but not exclusively designed for storing one or more components of wearable and implantable and near field/ proximity technology devices in an item of footwear, and so will hereinafter be generally described in this context.

It should be noted the invention has been discussed in the context of the invention being utilised with certain wearable, implantable and near field/ proximity technology devices. However it should be realised that these technology devices are only representative of a vast array of future technology devices that may be able to be powered. These devices will be networked using communications protocols such as but not restricted to near field/ proximity device communications, Bluetooth, nanoscale communication networks, body area networks, personal area networks, near-me area networks, car area networks and broader local area networks, wide area networks and internet cloud area networks.

### Background of Invention

There are currently numerous arrangements provided for storing a myriad of items within footwear. Many of these arrangements conveniently provide a dedicated separate storage compartment for storing items in a range of possible positions on or within the footwear, including within the body of the footwear heel.

Many of these possible arrangements are relatively elaborate in design, but largely impractical, in so far as they would be difficult and/or expensive to manufacture, offer very limited storage space, are difficult to access and/or don't suitably protect the contents of the storage space from possible damage. Moreover, some existing arrangements are considered to provide limited security to any items being stored within the footwear, potentially allowing for inadvertent or unauthorised removal (or loss) of the contents while wearing the footwear.

It would therefore be desirable to provide a storage arrangement associated with footwear having near seamless integration into existing footwear manufacturing processes, a potentially improved storage capacity and accessibility compared to at least some existing arrangements. It would be further desirable to provide a storage arrangement that protects and stabilises the contents therein stored. Further it would be desirable to provide an arrangement that provides improved security and lessens the likelihood of inadvertent or unauthorised removal therefrom when compared to existing arrangements.

In the context of wearable and implantable technology devices, there are currently numerous portable, wearable and implantable technology devices available, offering a diverse range of functions. These include devices offering the user general information service (such as Google Glasses™), communication functions (such as offered by smart phones), body monitoring devices, body sensory devices, devices for monitoring atmospheric conditions, and location trackers.

Such devices typically include a sensor, a power supply and some kind of interface for the user to interpret sensed data. They may also include additional functionality, such as where certain sensed data triggers the device to perform a function (for example, a certain reading may trigger a drug dosage being supplied to the user).

The fact that each device is provided with its own power supply is generally acceptable, except that the power supplies add to the bulk of the devices. When multiple wearable or implantable technology or near field/ proximity devices are worn at the same time, the user is, in effect carrying multiple (portable) power supplies.

it would, therefore, be desirable to potentially reduce the bulk of each wearable/imp!antable/near field/proximity technology device. It would also be desirable to potentially rationalise the number of power supplies required to use multiple wearable and implantable and near field/proximity technology devices at the same time.

Further, it would be desirable to potentially reduce the cost to manufacture wearable, implantable and near field/proximity technology devices by rationalizing the number of separate component parts therein required to operate.

It would also be desirable to potentially limit the number of rechargers required when using multiple wearable, implantable and near field/proximity technology devices, since currently many portable and rechargeable power supplies require a dedicated charger to recharge the power supply.

Finally, it would be desirable to offer a potential solution to the issue of when the power supply (e.g. battery) of a wearable, implantable or near field/proximity technology device runs out during use of the device, thereby rendering the device inoperable.

US 5,732,486 discloses an improved shoe having a light-emitting diode and a battery contained therein. The light-emitting diode is turned on when the wearer of the shoe exerts pressure on the heel of the shoe.

US 2012/023785 discloses a massaging footwear system having built in and concealed wireless remote controlled massaging and heating components.

A reference herein to a patent document or other matter which is given as prior art is not to be taken as an admission or a suggestion that that document or matter was, known or that the information it contains was part of the common general knowledge as at the priority date of any of the claims.

### Summary of Invention

According to one aspect of the present invention, there is provided a footwear heel as specified in the claims. Such an arrangement provides a potentially secure cavity for storing a range of items, some of which will be discussed in some detail below, but may also be utilised to store items such as keys, money, jewels and other important and valuable items.

Access through the inside of the footwear is desirable, because it potentially lessens the likelihood of stored items being inadvertently removed or stolen from the shoe while being worn, as the wearer's foot would prevent access to the cavity opening.

The term cavity has been used in the preceding paragraph, although it is to be appreciated that the cavity may also be described as void or recess. In one embodiment, the heel is integrated into a footwear sole, mid-sole or outer-sole during manufacture of the sole, and the heel forms part of an overall footwear sole mould

The term cavity has been used in the preceding paragraph, although it is to be appreciated that the cavity may also be described as void or recess. In one embodiment, the heel is integrated into a footwear sole, mid-sole or outer-sole during manufacture of the sole, and the heel forms part of an overall footwear sole mould

Indeed, it is to be appreciated that the heel is provided for integrating into an item of footwear.

Desirably, relevant safety footwear incorporating the invention will conform to associated safety, protective and/ or occupational footwear standards such as ISO 20345:2011, ISO 20346:2014, ISO 20347:2012, future revisions of these standards or the equivalent country-specific safety, protective or occupational footwear standards, such as AS/NZS 2210:1-5 and/or AS/NZS 4821 for Australia and New Zealand.

In one form of the invention, the access opening includes a recessed lip region for receiving a peripheral (or outer edge) region of the cover. It is envisaged that the lip region may be sufficiently recessed to receive the lid in an at least substantially flush configuration within the lip region such that the cover is level with the top of the sole, insole or foot-bed of the footwear and doesn't cause any discomfort for the wearer.

In one embodiment of the invention, the cavity includes a generally curved and smooth cavity wall. As examples, the cavity wall according to the invention can have a shape at least approximating one of a tear drop, ellipsoid, obround, spherical, oblate spheroid, prolate spheroid, horseshoe, trapezium or rounded shape. These shapes provide a desirable potential advantage by at least substantially preventing, or at least substantially limiting, both horizontal and vertical displacement between the embedded surround and the heel material while being worn. They potentially further assist during the manufacturing process by aiding the flow of fluid heel/sole material into the heel/sole mould and minimise the likelihood of unintentionally incorporating voids in the heel material.

The terms "horizontal" and "vertical" used in this specification are to be generally understood in the context of an item of footwear when sitting on an underlying surface,

In one embodiment, the invention includes a surround having a rigid or semi-rigid wall. The surround is provided about the cavity for protecting the storage cavity and any item stored within the cavity.

The surround may be of any suitable thickness and material. It is currently envisaged that the surround thickness may be approximately 1mm, and may be manufactured from a thermosetting material. The thickness of the surround may vary across its surface, if desired.

The surround may be semi-deformable during the production process.

Desirably, the surround complies with standard AS/NZS 2210 for nail penetration.

It may be desirable, at least in some embodiments, for the surround to be provided in a bright colour.

In one form, the surround includes one or more internal attachment points, which can be utilised to connect and securely retain customised contents within the cavity.

Paragraph intentionally left blank.

Further, the cover may include a force dampening layer or pad to dampen any impact received by the cover while being worn by a wearer.

In one possible form, the cover may have a thickness in the order of around 1mm.

The cover may include a top surface or layer of an elastic or semi-elastic deformable material. In one form, the cover has a concave shape and a convex shaped layer of elastic or semi-elastic deformable material thereon.

In a preferred form, the cover is received within the recessed lip region with a friction fit or screw fit. It is to be understood that reference to a friction fit is intended to also include reference to an interference fit or a press fit, or other type of fit wherein the cover is retained within recessed lip by friction rather than any other fastening means.

In one form of the invention, padding material is provided in the cavity for receiving an item therein. The padding material is provided for further protecting any item stored within the cavity, and providing a degree of stability to the contents. The padding material may be removable. An opening may be provided in the padding material for receiving the item within the padding material. Preferably, the padding material is manufactured from a lightweight (for example, foam) material and is shaped similarly to the cavity for a snug fit.

The use of foam for the padding is advantageous, in that it can be easily compressible, thereby providing a small amount of play to facilitate ingress and egress of contents into the padding and the cavity.

In all embodiments, the access opening is provided inside the footwear underneath a foot-bed or foot-bed portion. In such an arrangement, the foot-bed or foot-bed portion can include a fold-back crease to provide access to the cover, or a cut-out section to provide access to the cover.

The cover may include a rebated section to provide a simple and effective way of lifting and removing the cover. The rebated section may be provided at any suitable position on the cover.

In one form, the cover includes a lock to prevent unauthorised removal of the cover from covering the access opening. The lock may be releasable, so as to provide access to the access opening by removing the cover. However, a non-releasable (or permanent) lock is also contemplated for some embodiments in which no access the cavity is desired following fitting of the cover in place. The lock may include the use of adhesive to retain the cover in position.

The cavity has been specifically, but not exclusively, designed to retain a cavity item having a power supply device and a wireless power transmitting device for use with at least one of a wearable technology device, an implantable technology device and a near field/proximity technology device. With such an arrangement, in use, the wireless power transmitting device wirelessly transmits energy from the power supply to each wearable technology device, implantable technology device and near field/proximity technology device so as to power each wearable technology device, implantable technology device and near field/proximity technology device.

The terms "power transfer", "power transmitting" and related terms are used in this specification, but are to be generally understood in terms of being in relation to the transfer/transmission of energy.

it should be noted that references to power supply and power transmitting devices for use with at least one of a wearable technology device, an implantable technology device and a near field/proximity technology device is meant to include any supporting electronic componentry such as a statistical storage device, data storage and computer processors.

The power supply device preferably includes both an energy generation device and an energy storage device, although embodiments are contemplated in which only an energy generation device is provided.

Electronic componentry supporting at least one of the power supply device and wireless power transmitting device may be embedded within a surround, if a surround is provided.

Energy may be generated in the energy generation device by striking the heel on an underlying surface, such as when the item of footwear is being worn.

A force dampening layer may be provided on, for example, the cover for, in use, calibrating the force used to generate energy by the power supply device.

So far, the invention has been described in the context of a single heel. However, it is to be appreciated that one form the invention includes a pair of footwear heels. In such an arrangement, one of the heels (or a first heel) would be associated with an item of footwear for a left foot, and the other heel (or second heel) would be associated with an item of footwear for a right foot. Each heel may include a cavity for housing a respective power supply device and a respective wireless power transmitting device. The power supply device and wireless power transmitting device of one heel may be designated as a primary power supply device and wireless power transmitting device. The power supply and wireless power transmitting device of the other heel may be designated as a back-up (or contingency) power supply and wireless transmitting device for use in the event of failure of one or both of the primary power supply and wireless power transmitting devices.

In another possible arrangement, the left and right hand shoes of a footwear pair may be provided for separate (and perhaps complimentary) functions.

In one embodiment of the invention, only one of the heels would include a cavity.

So far, the invention has been broadly described in the context of a footwear heel. However, the invention also relates to a method of manufacturing a footwear heel. The method includes the steps of placing at least one of a surround and a last within one of a footwear heel mould and a footwear sole mould; and then adding a heel material in a fluid form into the mould about at least one of the surround and last to form a storage cavity for storing an item within the heel, with the cavity formed with an access opening to provide access to the storage cavity through the inside of an associated shoe. A removable cover is also provided for covering the access opening. The cover is deformable or at least semi-deformable, such that deformation of the cover by a wearer while wearing the footwear advantageously deforms or actuates an item stored within the cavity.

In one form, the surround or last includes an integrated barrier. The barrier is provided so as to prevent the heel material from flowing (or leaking) into an upper of an associated item of footwear during the step of adding the heel material in fluid form into the mould.

In one particularly preferred form, the cavity is provided solely within the heel. In other words, the cavity does not extend forwardly into the arch or ball portions of the footwear sole. For footwear where there is sufficient sole height to incorporate cavity dimensions (sole height undiminished at the heel breast), a minor part of the cavity may extend into the rear of the footwear sole-waist region.

When the method utilises a surround, the barrier may be provided about an upper edge region of the surround.

In one embodiment, the method further includes fitting the barrier snugly within, above or underneath an insole layer of the item of footwear.

When the method utilises a last, the barrier may be formed about the last.

The method step of adding a material to one of a footwear heel mould and a footwear sole mould about the surround or last is undertaken using one of a direct injection, all moulded, casting, pouring or vulcanising processes.

### Brief Description of Drawings

It will be convenient to hereinafter describe preferred embodiments of the invention with reference to the accompanying drawings. The particularity of the drawings is to be understood as not limiting the preceding broad description of the invention.
Figure 1 is a side view of an existing footwear sole.
Figure 2 is a plan view of the footwear sole shown in Fig.1.
Figure 3 is a side view of a footwear sole incorporating a heel according to one embodiment of the present invention.
Figure 4 is a plan view of the footwear sole shown in Fig. 3.
Figure 5 is a side view of an existing footwear sole portion.
Figure 6 is a plan view of the footwear sole portion shown in Fig. 5.
Figure 7 is a side view of a footwear heel according to another embodiment of the present invention.
Figure 8 is a plan view of the footwear heel shown in Fig. 7.
Figure 9 is a side view of existing footwear.
Figure 10 is a side view of footwear according to another embodiment of the present invention.
Figure 11 is a side view of another embodiment of footwear according to the present invention.
Figure 12 is a plan view of the footwear shown in Fig. 11.
Figure 13 is perspective view of a portion of an item to be housed within the cavity of a heel in accordance with one embodiment of the present invention.
Figure 14 is a schematic diagram of an arrangement incorporating a heel in accordance with one embodiment of the present invention,
Figure 15 is a schematic diagram of an arrangement incorporating a heel in accordance with another embodiment of the present invention.

### Detailed Description

The present invention may utilize any one (or more) of a wide variety of footwear designs, as will be evident from the following discussion of the drawings. It is to be appreciated that while numerous footwear designs are shown and discussed in this application, the invention may incorporate other footwear designs.

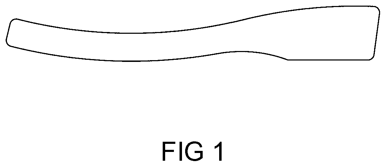

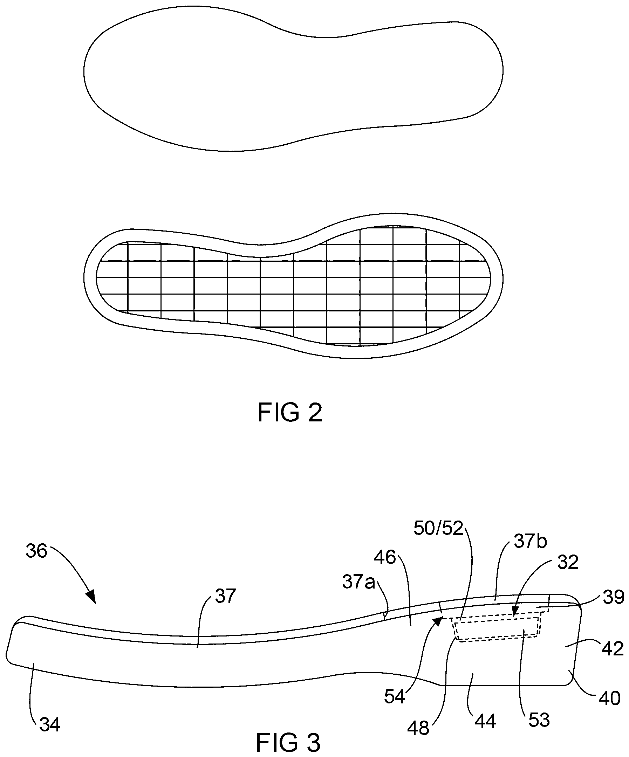

Figures 1 and 2 illustrate conventional footwear incorporating a cement/adhesive attached sole construction.

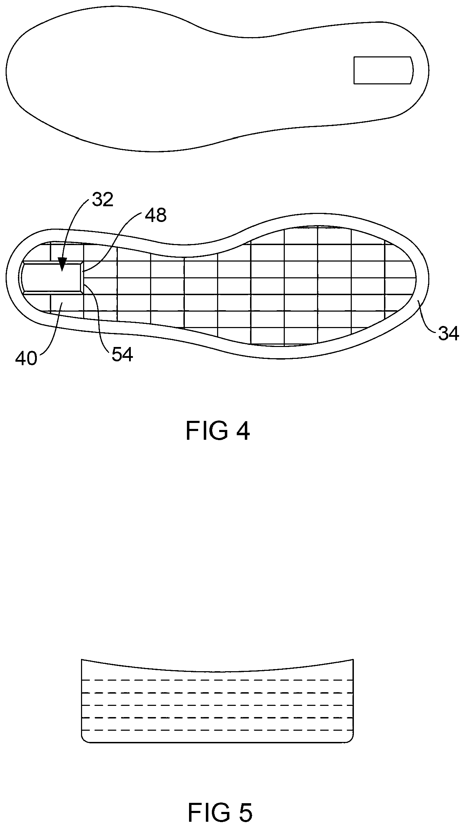

Figures 3 and 4 also illustrate footwear having a cement/adhesive attached sole construction, but wherein the mould used for formation of the sole is modified to form a heel cavity in accordance with the present invention.

As can be seen, there is provided a footwear sole 34 including an integrated heel 40. The heel 40 includes a storage cavity 32 provided (or embedded) within the heel 40. The cavity 32 is provided for storing an item (not shown). The cavity 32 includes an access opening 52 providing access to the cavity 32 through the inside of an associated item of footwear 36. A cover 50 is provided for covering the access opening 52.

It can be seen in Figure 3 that the cavity 32 includes a recessed lip or step 54 for receiving the cover 50 in a flush manner within the footwear 36, thereby not affecting the wearing comfort of the footwear 36. In the embodiment of Figures 3 and 4, the access opening 52 is accessible through or by removal of a footbed. The cover 50 is receivable in the recessed lip or step 54 with a friction or screw fit.

The cover 50 is deformable or at least semi-deformable, such that deformation of the cover 50 by a wearer while wearing the footwear 36 is capable of deforming or actuating an item stored within the cavity 32.

Further, although not clearly evident, the cover 50 includes a force dampening layer or pad to dampen any impact received by the cover 50 while being worn by a wearer.

The illustrated cover 50 may have a thickness in the order of around 1mm.

Further, although not illustrated, the cover 50 may include a top surface or layer of an elastic or semi-elastic deformable material; and the cover 50 has a slight concave shape and a convex shaped layer of elastic or semi-elastic deformable material thereon.

The cavity 32 is provided in a midsole portion 42 of the heel 40, between an outer sole portion 44 and an insole portion 46.

The cavity 32 is formed in the heel 40 during manufacture of the heel 40 by providing at least one of a surround and a last within one of a footwear heel mould and a footwear sole mould, and then adding a heel material in a fluid form into the mould about the surround and/or last.

A rigid or semi-rigid surround 48 is shown in Figures 3 and 4, and advantageously provides reinforcement for the cavity wall, and protects the storage cavity 32 and any item stored within the cavity 32.

Suitable strengthening of the sole 34 may be required over and above that shown in the conventional design of Figures 1 and 2, so as to accommodate the cavity 32 without compromising the integrity of the sole 34.

A light-weight foam, removable padding material 53 is provided in the cavity 32 for receiving an item therein. The padding material 53 is provided for further protecting any item stored within the cavity 32, and providing a degree of stability to the contents. The padding material 53 is provided with an opening (not visible) for receiving the item within the padding material 53. The padding material 53 is shaped to snugly fit within the cavity 32,

The access opening 52 is provided inside the footwear 36 underneath a foot-bed 37. It is envisaged that the foot-bed 37 would include one of a fold-back crease 37a or a cut-out section 37b to provide access to the cover 50.

The cover 50 includes a rebated section 39 to provide a simple and effective way of lifting and removing the cover 50.

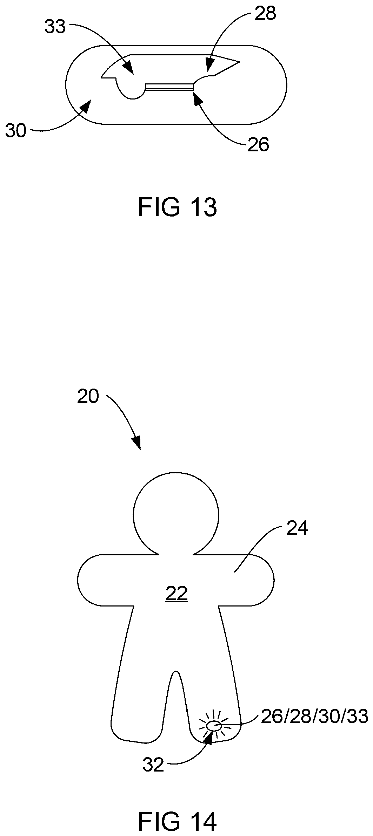

Figure 14 provides a schematic view of the cavity 32 of the present invention when utilised in one possible application having a wearable technology system 20. The system 20 includes two wearable technology devices in the form of an ECG 22 and a GPS tracker 24, The ECG 22 is worn on the user's chest, adjacent the heart and the GPS tracker 24 is worn on the wrist.

While two wearable technology devices 22, 24 are shown, the system 20 may incorporate any practical number of wearable technology devices and implantable technology devices and near field/ proximity devices. Other possible wearable/implantable/ near field/proximity devices include those related to general information communication, communication, body functions, body sensory functions, atmospheric conditions, body coverings and geographic location devices. It is to be appreciated that each wearable/implantable technology device may include more than one function or application. Example devices and uses are provided below:

| **Application** | | **Example Products** | **Example Product Company** |
|---|---|---|---|
| General Information Communication | Presenting information, including filtering activities, on surrounds and information captured by other wearable/implantable technology devices | Google Glasses, Pebble Smart Watch, Smartie Ring | Google |
| | | | Pebble |
| | | | Technology |
| | | | Indiegogo |
| Communication | Cover the powering of current generation communication devices and future communications technology including but not restricted to 3D, holographic, mind (thought) controlled and/ or Virtual Reality communications devices | iPhone 5c | Apple |
| | | Galaxy Tab 2 | Samsung |
| Body Functions | Cover the powering of wearable/implantable technology whose functions include detection, identification, escalation potential rectification of normal, irregular abnormal body functions including, but restricted to: | Biostamp | MC10 |
| | | Mimo | Rest Devices |
| | | Various | Heapsylon |
| | | Smart Bra | Concept |
| | | Mammo Bra Fitbit | Concept |
| | Eating | | |
| | Electroencephalography (EEG) | | |
| | Electrocardiogram (ECG) | | |
| | Electromyography (EMG) | | |
| | Heart Rate and Heart Activity | | |
| | Breathing Rate | | |
| | Blood Pressure | | |
| | Blood Testing (e.g. alcohol) | | |
| | Temperature | | |
| | Body, Skin and Hair Hydration and Condition | | |
| | Skin abnormalities | | |
| | Endocrinology functions (e.g. thyroid) | | |
| | Gastrointestinal functions (e.g. reflux) | | |
| Body Sensory Functions | Cover the powering of wearable/implantable technology whose functions include the detection, identification, escalation, possible augmentation/ enhancement and potential rectification of normal, irregular and abnormal body sensory functions including, but not restricted to: | Hearing Aids, Speech Processors | Various |
| | Auditory | | |
| | Speech | | |
| | gustatory | | |
| | olfactory | | |
| | somatosensory/tactition/mechanoreception | | |
| Atmospheric Conditions | Cover the powering of wearable/implantable technology whose functions may include, but are not restricted to, the sampling, detection, escalation and potential rectification of atmospheric conditions including, but not restricted to: | Unknown | Unknown |
| | Temperature | | |
| | Atmospheric Pressure | | |
| | Atmospheric Pollution | | |
| | Atmospheric Pollen | | |
| | Weather Conditions | | |
| | UV Exposure | | |
| | Atmospheric Conditions (Weather, Pollution) | | |
| | Atmospheric Gas Ratios | | |
| Body Coverings | Cover the powering of wearable/implantable technology whose functions may include, but are not restricted to, the detection and/or presentation of information though the medium of body coverings | Sensory Dress | |

The provision of multiple wearable and/or implantable technology and/or near field/ proximity devices allows for a range of applications, Example applications include communications, safety, social activities, dress attire, hobbies and sport (such as monitoring individual and team sport metrics) and medical implants. The invention allows, for example, the provision of assistance in areas such as monitoring of the safety of workers and early identification of potentially life threatening injuries or situations.

Preferably, the wearable and/or implantable technology and/or near field/ proximity devices include a suitable means for displaying or presenting the information pertaining to and captured by the devices. As non-limiting examples, the devices may be utilized for the analysis and capture of information relating to the wearer's body and its associated internal functions, body sensory functions and atmospheric, geographic and local proximity information.

Figure 14 also illustrates a device power supply 26 and a wireless power transmitting device 28, which may both be provided within an integrated unit 30 of the type shown in Figure 13. The power supply 26 is intended to be rechargeable, although need not be so. The unit 30 is also shown as including supporting electronics 33 and a statistical storage device, which may prove useful for a number of applications.

The integrated unit 30 of Figure 13 is designed for receipt in the cavity 32 (of Figures 3 and 4) in the heel 40 of the user' s footwear 36 (shown in dashed line format in Figure 3). The cavity 32 may adopt any suitable shape, and may include sloping sidewalls. The unit 30 may require a different shape to that illustrated in Figure 13 in order to fit within the cavity 32. Thus, it can be appreciated that, in the context of the user's body, the power supply 26 is located remotely from the wearable technology and/or implantable technology and/or near field/ proximity device and separately worn by the user. This is possible because a wireless power transmitting device 28 is provided for wirelessly transmitting energy from the power supply 26 to each of the wearable technology devices to power the wearable technology devices 22,24.

The unit 30 may incorporate other components so as to provide enhanced functionality of the system. For example, the unit 30 may include other electronics components such as sensory devices (e.g. body, environment, spatial), data storage devices (egg. RFID, flash and other mediums of storage), computer processors, computer memory and communication transmitters). These additional components are preferably fitted within the unit 30, but this does not preclude them being fitted elsewhere within the footwear, if desired.

If an additional power supply is provided then the footwear may also be provided with a dedicated power storage device for storing any power harvested from the footwear or another associated power generating device. In this way, two (or indeed more) power sources may be associated with each system. The dedicated power storage device may be incorporated into the unit 30, with the power supply 26, if desired.

One particular benefit in providing a device power supply 26 for powering multiple wearable/implantable/ near field/ proximity technology devices is that each of the technology devices can be potentially manufactured more compactly and light-weight because a separate battery need not be required in each technology device. However, it may be that some technology devices retain at least a small integrated battery as a back-up power source, should a back-up power source be required.

The illustrated cavity 32 is provided for receiving an integrated unit containing a power supply 26 and a transmitting device 28, although it is also contemplated that the cavity may house solely the power supply 26 (or transmitting device 28) if it is desirable to do so. In fact, the cavity 32 may be used for any desired purpose, including for the storage of miscellaneous items.

The footwear 36 and sole 34 may be manufactured with the unit 30 already fitted within the cavity 32. In the embodiment illustrated in Figures 3 and 4 the unit 30 is removable from the footwear 36 and sole 34.

The illustrated rechargeable power supply 26 shown in Figure 13 is provided in the form of a kinetic battery, wherein the battery is recharged upon movement thereof. Thus, movement of the footwear (such as by walking, jogging, running or other perambulatory movements) recharges the battery incorporated into the footwear. In this way, a kinetic battery can be considered to be a type of electric power generator, although preferably also having the capability of storing at least some of the electric power generated for later use.

One specific form of a kinetic battery contemplated in the present invention includes a piezoelectric generator (not visible), whereby the piezoelectric generator is electrically recharged upon deformation, vibration or pressure applied thereto.

In one possible alternative form, the power supply is of the non-rechargeable type. Fitment of a non-rechargeable power supply into the cavity 32 may be practical, particularly where removal and replacement of a used power supply is possible.

The power transmitting device may adopt any feasible form and, in the embodiment illustrated in Figures 13 and 14 includes a non-radiative energy transmitting device 28, allowing the power supply 26 to separately and wirelessly power the devices 22, 24.

In one form, the wireless power transmission arrangement may be of the type disclosed in any one or more of US Patents 8159364, 8446248, 8419953 and 8558661.

Electronic componentry of at least one of the power supply device 26 and wireless power transmitting device 28 may be embedded within the surround 48 (if, as in the embodiment of Figures 3 and 4, a surround is provided).

Energy may be generated in the energy generation device by striking the heel 40 on an underlying surface, such as when the footwear 36 is being worn.

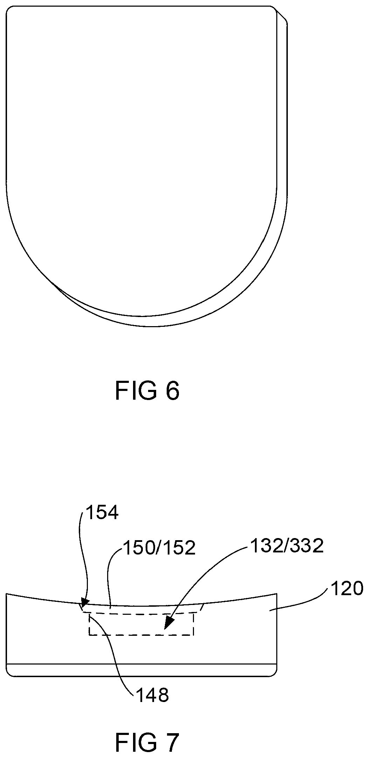

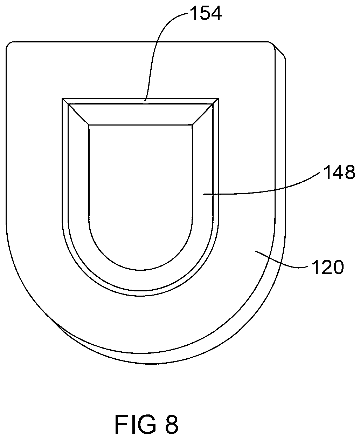

Figures 7 and 8 illustrate a heel 120 pertaining to another possible footwear design incorporating the invention. The heel 120 forms part of a footwear sole (the remainder of the sole has been omitted from the drawings for clarity purposes). A conventional (and comparable) heel design is shown in Figures 5 and 6 for comparative purposes.

Figures 5 through 8 are generally directed to a stitched sole construction. It is to be appreciated, however, that the heel 120 shown in Figures 7 and 8 is modified to form a cavity, which is otherwise absent for the conventional heel shown in Figures 5 and 6.

The heel 120 may be utilized in a wearable technology system 20 of the type generally shown in Figure 14 including any desired number of wearable technology and implantable technology and near field/ proximity devices.

The heel 120 shown in Figures 7 and 8 includes cavity 132 designed for housing an integrated power supply and wireless power transmitting unit 30 of the type shown in Figure 13 (and schematically in Figure 14), although the specific shape of the unit 30 may require modification to fit into the cavity 132. It is to be appreciated that the heel 120 may also be utilised for other applications besides in a wearable technology system.

As with the cavity 32 shown in Figures 3 and 4, the cavity 132 allows the power supply 26 to be located remotely from the wearable technology device and separately worn by the user, by virtue of the wireless power transmitting device 28 for wirelessly transmitting electric power from the power supply 26 to each of the associated wearable and/or implantable technology devices. Again, one particular benefit in providing a device power supply 26 for powering multiple wearable/implantable technology devices is that each of the technology devices can be potentially manufactured more compactly and light-weight, because a separate battery need not be required in each technology device. The unit 30 and components thereof may be of substantially the same form as that incorporated into the footwear 36 of Figures 3 and 4, or they may adopt some other suitable form.

The design of the heel 120 is such that the unit 30 is removably fitted within the cavity 132. The cavity 132 includes a cover 150 which, when opened, allows access to the cavity 132 through an access opening 152. It can be seen in Figure 7 that the cavity 132 Includes a lip or step 154 for receiving the cover 150 in a flush manner within the footwear, thereby not affecting the wearing comfort of the footwear. In the embodiment of Figures 7 and 8, the access opening 152 is accessible through or by removal of a footbed (not shown).

It can also be seen in Figure 7 that the cavity 132 is provided above an outer sole portion 144 of the heel.

Although not clearly shown in Figures 7 and 8, the cavity 132 may include a reinforced cavity wall 148 (in the form of a surround), for protecting the power supply 26 and the power transmitting device 28 and to potentially provide additional strength the heel 120. The cavity 132 may also be padded to further protect the components therein contained.

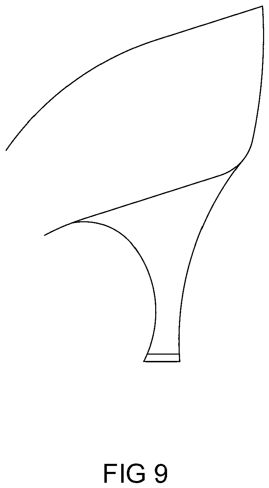

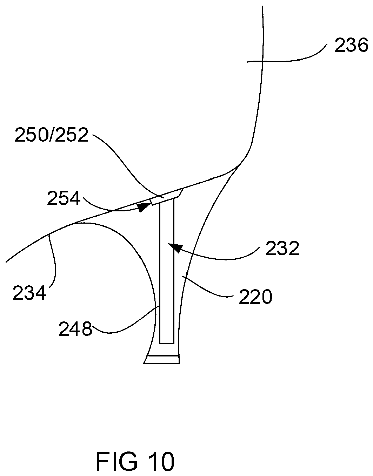

Figure 10 illustrates yet another possible footwear design incorporating the present invention. The footwear 236 is in the form of a woman's high heel shoe having a sole 234 and heel 220 attached to the sole 234. A conventional (and comparable) women's high heel shoe design is shown in Figure 9 for comparative purposes. The heel 234 may require strengthening if incorporating the invention.

The heel 220 may be utilized in a wearable technology system 20 of the type generally shown in Figure 14 including any desired number of wearable technology and implantable technology and near field/ proximity devices. The heel 220 may also be utilised to store any other desired item.

The heel 220 shown in Figure 10 includes a cavity 232 designed for housing an integrated power supply and wireless power transmitting unit 30 of the type shown in Figure 13, although the specific shape of the unit 30 may require modification to fit within the cavity 232.

Like the cavity 32 shown in Figures 3 and 4, the cavity 232 allows the power supply 26 to be located remotely from the wearable technology device and separately worn by the user, by virtue of the wireless power transmitting device 28 for wirelessly transmitting power from the power supply 26 to each of the associated wearable and/or implantable technology and/or near field/ proximity devices. The unit 30 and components thereof may be of substantially the same form as that incorporated into the footwear 36 of Figures 3, or they may adopt some other suitable form. Of course, the shape of the unit 30 may need to be altered so as to fit within the cavity 232.

The design of the heel 220 is such that the unit 30 is removably fitted within the cavity 232 (but could be permanently fitted, if desired). The cavity 232 includes a cover 250 which, when opened, allows access to the cavity 232 through an access opening 252. It can be seen in Figure 10 that the cavity 232 includes a lip or step 254 for receiving the cover 250 in a flush manner within the footwear 236, thereby not affecting the wearing comfort of the footwear 236. In the embodiment of Figure 10, the access opening 252 is accessible through or by removal of a footbed (not shown).

The cavity 232 may include a reinforced cavity wall 248 (in the form of a surround), for protecting the power supply 26 and the power transmitting device 28, and to potentially provide additional strength to the heel 220. The cavity 232 may also be padded to further protect the components or items therein contained.

A hole may be cut into the insole and footbed fitted within the shoe to provide access to the cavity 232. Altematively, the footbed may be provided with a fold-back crease to provide access to the cavity 232.

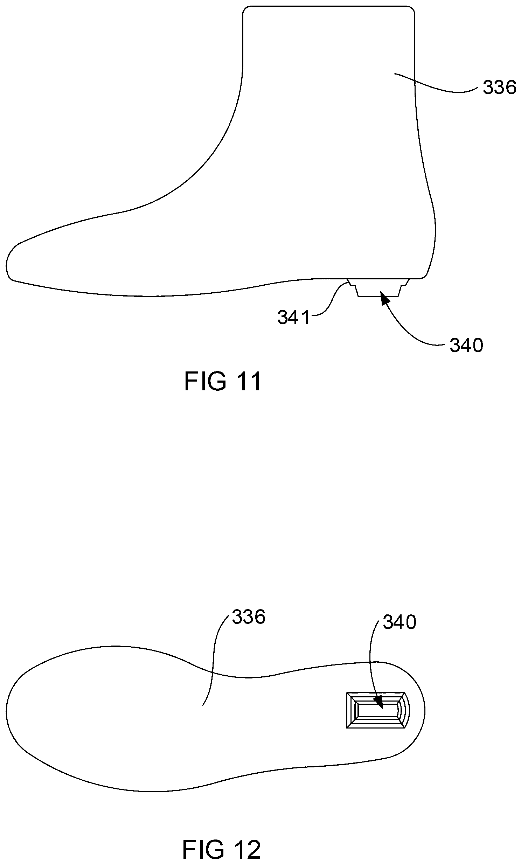

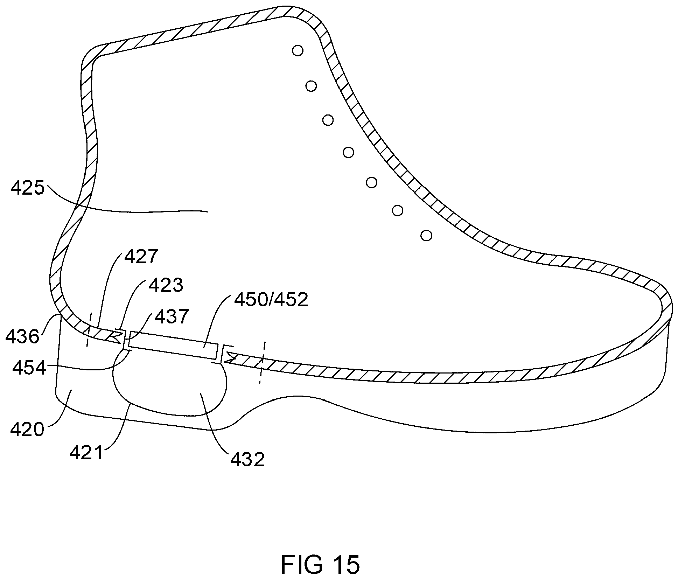

Figures 11 and 12 illustrate a footwear last 336 for use in manufacturing a possible footwear design (such as footwear 436 of Figure 15) incorporating the present invention, wherein the footwear is manufactured by a direct injection moulding technique.

Manufacture of the footwear 120 may incorporate the usage of one or two lasts. These lasts may include a "making" last 336 and an "injecting" last (not shown).

The "making" last 336 may also be used during the injection process - in this case an additional "injecting" last may not be required. The injecting last (composed of mediums such as metal or plastic) may include an additional protrusion 340 (see Figures 11 and 12). This protrusion 340 may be available as an add-on to existing lasts or as a "made for purpose" last. The protrusion 340 may be attached to an existing last by methods including but not limited to screws, hinges, latches, welding, adhesive and/ or magnetic forces. The protrusion 340 may be solid or hollow. If it is hollow, the hollow section may face the last. The protrusion 340 may follow the contour or edge of the heel section of the last. During sole moulding, this protrusion enables formation of a cavity within the heel area of the sole of the footwear. The protrusion 340 may be stepped to allow the formation of a step/ledge (by virtue of the step/ledge/lip 341 on the last 336) within the sole/midsole and may also incorporate sloping channel(s) from the sides and/or rear of the footwear. While still providing physical access to the cavity, the ledge may provide a fixing point which would enable a secure closure to the top of the cavity to prevent ingression of the heel into the cavity during wear. The cavity and walls are constructed from suitable materials to allow for the transmission of energy or information.

To allow the upper to be seated onto the last, the protrusion from the last may require a similar shaped hole to be cut in the insole

The protrusion 340 is provided to form a cavity 132 of the type shown in Figures 7 and 8 for housing an item, such as an integrated power supply 26, wireless power transmitting unit 30, and associated supporting electronics 33 of the type shown in Figure 13. The specific shape of the unit 30 may require modification, such as insertion into padding shaped similar to the cavity 132, to fit in the cavity 132.

The cavity 132 (again, shown in Figures 7 and 8) allows the power supply 26 to be located remotely from the wearable technology device and separately worn by the user, by virtue of the wireless power transmitting device 28 for wirelessly transmitting power from the power supply 26 to each of the associated wearable and/or implantable technology devices. The unit 30 and components thereof may be of substantially the same form as that incorporated into the footwear 36 of Figures 3, or they may adopt some other suitable form. The shape of the unit 30 may need to be altered, such as insertion into padding shaped similar to the cavity 132, so as to fit within the cavity 132.

The cavity 132 may include a reinforced cavity wall 148 in the form of a surround for protecting the power supply 26 and the power transmitting device 28 and associated supporting electronics 33, and to potentially provide additional strength to the heel 120. The cavity 132 may also be padded to further protect the components therein contained.

An alternative method for the formation of the cavity 332 is to incorporate/stick/attach the unit 30 onto the heel area of the insole (or the heel area of a fully enclosed upper) before the manufacturing step of sole/ midsole injection. For example, the unit 30 may be incorporated into the actual formation of the insole before its integration into the footwear upper or attached to the insole after completion of the manufacture of the upper. The outer capsule (or surround) of the unit 30 could form the cavity 332 required within the sole/midsole (or be used in conjunction with the proposed injecting last protrusion), and the heel/sole material in fluid form could then be added to the heel/sole mould about the surround. Once the heel material has sufficiently solidified, the surround is then embedded within the heel.

Thus, it is to be appreciated that manufacture of the heel includes the steps of placing at least one of a surround and a last within a heel mould; and then adding a heel material in a fluid form into the mould about at least one of the surround and/or last to form a storage cavity for storing an item within the heel, with the cavity formed with an access opening to provide access to the storage cavity through the inside of an associated item of footwear.

Future technologies for the manufacture of footwear, such as but not restricted to 3D printing, will likely adopt an additive manufacturing process whereby successive layers of the shoe are built from cross sections obtained from footwear digital models of reference using materials that are generally partially fluid and applied via extrusion deposition and photopolymerisation. The digital model of reference for the sole of the footwear may incorporate a cavity, which may be stepped to allow the formation of a ledge within the sole/midsole. Both a similar shaped hole to the cavity, which may be required to be cut in the insole above the cavity, and a cover for the access opening, may also be incorporated into the digital model of reference.

So far, the invention has been generally described in the context of wireless transmission of power. However, it is also contemplated that the invention could also include as an option wired power transmission between the power supply and the technology devices. Wired power supply may be by way of a hardwire connection, or may also include power transmission via a port (for example, a USB, USB mini, FireWire, etc.), or by direct connection to other electronic components within the system. Access to these connections could be via the access opening to the cavity and might require the cover to be adapted to incorporate the passage of physical wires or ports.

Figure 15 illustrates another embodiment of the present invention, wherein the cavity 432 has a curved and smooth cavity wall having a generally rounded shape by the provision of a surround 421 integrated into the heel 420. It is to be appreciated that this shape may be provided in any one of a tear drop, ellipsoid, obround, spherical, oblate spheroid, prolate spheroid, horseshoe, trapezium or other rounded shape.

These shapes provide a desirable potential advantage by at least substantially preventing, or at least substantially limiting, both horizontal and vertical displacement between the embedded surround and the heel material white being worn. They potentially further assist during the manufacturing process by aiding the flow of fluid heel/sole material into the heel/sole mould and minimise the likelihood of unintentionally incorporating voids in the heel material.

As shown in Figure 15, the surround 421 (or optionally a last) includes an integrated barrier 423. The barrier 423 is provided so as to prevent the heel material from flowing (or leaking) into the footwear upper 425 during the step of adding the heel material in fluid form to the mould.

When the method utilises a surround 421 (as in the embodiment shown in Figure 15), the barrier 423 may be provided about an upper edge region 437 of the surround,

It can be seen that in this arrangement, the barrier 423 is fitted barrier snugly within, above or underneath an insole layer 427 of the item of footwear, or form part of the insole.

When the method utilises a last, the barrier may be formed about the last. When only using a last, the barrier may include a ring fitted snugly under the insole layer 427. When using a last and a surround, the barrier 423 may be fitted snugly within, above or underneath the insole layer 427 of the item of footwear.

The cavity 432 is provided in the rear of the footwear in the heel 420.

The cavity 432 includes a lip or step (not clearly shown) for receiving the cover 450 in a flush manner within the footwear 436, thereby not affecting the wearing comfort of the footwear 436. In the embodiment of Figure 15, the access opening 452 is accessible through or by removal of a footbed.

The present invention potentially provides a footwear storage arrangement having a potentially improved storage capacity compared to at least some existing arrangements. It also potentially provides a storage arrangement that protects and stabilises the contents therein stored, particularly when provided with a surround.

The uptake of the use of personal storage cavities by consumers will be facilitated by the ability of cavity contents to be transferred between cavities located in different physical entities (such as shoes) by removing the cover to the access opening and egressing contents from the cavity,

The cavity may be utilised in a myriad of possible applications, and can be provided in a range of sizes and shapes to suit those applications.

The applicant has also provided an arrangement that is capable of being integrated in mainstream production in the footwear industry, allowing a manufacturing cost for the production of personal storage cavities within the footwear which can facilitate their uptake by footwear manufacturers.

Further, access to the storage cavity of the present invention is through the inside of the footwear, and so requires the footwear to first be removed from the wearer's foot. This provides potentially improved security and lessens the likelihood of inadvertent item removal therefrom when compared to at least some existing arrangements that allow access through the rear, side or underside of the footwear (and regardless of whether or not the prior art footwear is being worn). Security can optionally be further improved in the present invention by permanently locking or securing the access cover in place, either by using adhesive or some other suitable arrangement. The lock may also be in the form of a releasable lock.

In the context of the invention being utilised in certain wearable and implantable technology devices, the invention allows for the possibility of such devices to be manufactured more compactly, since the power supply is provided separate to the device and stored within the heel cavity. This may be of particular benefit when multiple wearable, proximity or implantable technology devices are worn at the same time, since each device can be potentially more compact than existing models.

In the context of the invention being utilised in certain wearable and implantable technology devices, the present invention also potentially rationalises the number of power supplies required to operate multiple wearable and implantable technology devices at the same time.

In the context of the invention utilised in certain wearable and implantable technology devices, given the potential removal of the power source from wearable and implantable devices (and possibly proximity devices), it may be possible to reduce the manufacture cost of the devices, which obviously is desirable.

In the context of the invention utilised in certain wearable and implantable technology devices, given that the power source of the present invention is rechargeable, it potentially does away with the need for a dedicated recharger for each wearable/implantable/proximity device that incorporates a rechargeable power supply.

In the context of the invention utilised in certain wearable and implantable technology devices, the present invention also potentially addresses the current issue with some devices, wherein the power source runs out mid-use of the device. The power source of the present invention is rechargeable, so a constant supply of power to each device may be possible. Nevertheless, if desired, some devices may retain a separate power source (e.g. battery) as a back-power source. This back-up power source may be more compact than existing power sources, given that its use may be necessary relatively infrequently.

## Claims

1. A moulded footwear heel (40), including:
a storage cavity (32) within the heel (40), with the cavity (32) provided for storing an item;
the cavity (32) including an access opening (52) providing access to the storage cavity (32) through the inside of an associated item of footwear (36); a removable cover (50) for covering the access opening (52); the cover (50) being deformable, such that deformation of the cover (50) by a wearer while wearing the footwear (36) deforms or actuates an item stored within the cavity (32),
**characterized in that** said removable cover (50) is provided underneath any foot-bed provided in or associated with the item of footwear.

2. A footwear heel (40) according to claim 1, **characterised in that** the heel (40) is integrated into a footwear sole (34), mid-sole (42) or outer-sole (44), and preferably the heel forms part of an item of footwear (36).

3. A footwear heel (40) according to any one of the preceding claims, **characterised in that** the access opening (52) includes a recessed lip region (54) for receiving a peripheral edge region of the cover (50), the lip region (54) being sufficiently recessed to receive the cover (50) in an at least substantially flush configuration within the lip region (54), and preferably the cover (50) is received within the recessed lip region (54) with a friction fit or screw fit.

4. A footwear heel (40) according to any one of the preceding claims, **characterised in that** the cavity (32) includes a generally curved and smooth cavity wall, and wherein the cavity (32) preferably has a shape at least approximating one of a tear drop, ellipsoid, obround, spherical, oblate spheroid, prolate spheroid, horseshoe, trapezium or rounded shape.

5. A footwear heel (40) according to any one of the preceding claims, including a surround (48) having a rigid or semi-rigid wall for protecting the storage cavity (32) and any item stored within the cavity (32).

6. A footwear heel (40) according to any one of the preceding claims, **characterised in that** the cover (50) includes a force dampening layer to dampen any impact received by the cover (50) while being worn by a wearer and in use, the force dampening layer is preferably used in the calibration of force used to generate energy by a power supply device.

7. A footwear heel (40) according to any one of the preceding claims, including padding material (53) provided in the cavity (32) for receiving an item therein, the padding material (53) preferably having a padding opening for receiving the item within the padding material (53).

8. A footwear heel (40) according to any one of the preceding claims, **characterised in that** the access opening (52) is provided inside the footwear (36) underneath a foot-bed or foot-bed portion, the foot-bed or foot-bed portion including one of a fold-back crease and a cut-out section to provide access to the cover.

9. A footwear heel (40) according to any one of the preceding claims, **characterised in that** the cover (50) includes a lock to prevent unauthorised removal of the cover for covering the access opening, and the lock is preferably a releasable lock to provide access to the access opening (52) by removing the cover (50).

10. A footwear heel (40) according to any one of the preceding claims, **characterised in that** the cavity (32) includes a cavity item having a power supply (26) device and a wireless power transmitting device (28) for use with at least one of a wearable technology device (22/24), an implantable technology device and a near field/proximity technology device, in use, the wireless power transmitting device (28) wirelessly transmits energy from the power supply (26) to each wearable technology device (22/24), implantable technology device and near field/proximity technology device so as to power each wearable technology device (22/24), implantable technology device and near field/proximity technology device.

11. A footwear heel (40) according to claim 10, **characterised in that** the power supply device (26) includes an energy generation device and an energy storage device, and electronic componentry of at least one of the power supply device (26) and wireless power transmitting device (28) is preferably embedded within the surround (48), and wherein striking of the heel (40), such as when the item of footwear (36) is being worn, preferably generates energy in the power supply device (26).

12. A pair of footwear heels, with each heel (40) of the pair of footwear heels in accordance with any one of the preceding claims, with a first heel of the pair of heels associated with an item of footwear for a left foot, and a second heel of the pair of heels associated with an item of footwear for a right foot, with the cavity (32) provided in each heel (40) preferably including a power supply device (26) and a wireless power transmitting device (28), with power supply device (26) and wireless power transmitting device (28) of one heel (40) being designated as a primary power supply device and wireless power transmitting device, and the power supply device (26) and wireless power transmitting device (28) of the other heel (40) being designated as a back-up power supply and wireless transmitting device for use in the event of failure of one or both of the primary power supply and wireless power transmitting devices.

13. A method of manufacturing a footwear heel (40), including the steps of:
providing at least one of a surround (48) and a last within one of a footwear heel mould and a footwear sole mould;
adding a heel material in a fluid form into the mould about at least one of the surround (48) and last to form a storage cavity (32) for storing an item within the heel (40);
the cavity (32) formed with an access opening (52) to provide access to the storage cavity (32) through the inside of an associated item of footwear (36); and
providing a removable cover (50) underneath any foot-bed provided in or associated with the item of footwear for covering the access opening (52) wherein the cover (50) is deformable, such that deformation of the cover (50) by a wearer while wearing the item of footwear (36) deforms or actuates an item stored within the cavity (32).

14. A method of manufacturing a footwear heel (40) according to claim 13, the surround (48) or last including an integrated barrier preventing the heel material from flowing into an upper of an associated item of footwear (36) during the step of adding the heel material in fluid form to the mould, and preferably the step of adding a material to one of a footwear heel mould and a footwear sole mould about the surround or last is undertaken using one of a direct injection, all moulded, casting, pouring or vulcanising processes.

15. A method of manufacturing a footwear heel (40) according to claim 14, **characterised in that** the method utilises one of:
a surround (48), and the barrier is provided about an upper peripheral region of the surround (48), and the method further includes fitting the barrier snugly within, above or underneath an insole layer of the item of footwear (36), and
a last, and the barrier is formed about the last.

## Patentansprüche

1. Geformter Schuhabsatz (40), der Folgendes umfasst:
einen Aufbewahrungshohlraum (32) in dem Absatze (40), wobei der Hohlraum (32) zum Aufbewahren eines Gegenstandes vorgesehen ist;
wobei der Hohlraum (32) eine Zugriffsöffnung (52) umfasst, die Zugriff zu dem Aufbewahrungshohlraum (32) durch das Innere eines zugehörigen Schuhs (36) bereitstellt;
eine entfernbare Abdeckung (50) zum Abdecken der Zugriffsöffnung (52); wobei die Abdeckung (50) verformbar ist, so dass eine Verformung der Abdeckung (50) durch einen Träger beim Tragen des Schuhs (36) einen Gegenstand verformt oder betätigt, der in dem Hohlraum (32) aufbewahrt ist,
**dadurch gekennzeichnet, dass** die entfernbare Abdeckung (50) unter jedem Fußbett vorgesehen ist, das in dem Schuh vorgesehen ist oder diesem zugeordnet ist.

2. Schuhabsatz (40) nach Anspruch 1, **dadurch gekennzeichnet, dass** der Absatz (40) in eine Schuhsohle (34), Zwischensohle (42) oder Außensohle (44) integriert ist und vorzugsweise der Absatz einen Teil eines Schuhs (36) bildet.

3. Schuhabsatz (40) nach einem der vorhergehenden Ansprüche, **dadurch gekennzeichnet, dass** die Zugriffsöffnung (52) einen ausgesparten Lippenbereich (54) zur Aufnahme eines umlaufenden Randbereiches der Abdeckung (50) umfasst, wobei der Lippenbereich (54) ausreichend vertieft ist, um die Abdeckung (50) in einer mindestens im Wesentlichen bündigen Konfiguration innerhalb des Lippenbereichs (54) aufzunehmen, und wobei die Abdeckung (50) vorzugsweise in dem vertieften Lippenbereich (54) mit einem Reib- oder Schraubsitz aufgenommen wird.

4. Schuhabsatz (40) nach einem der vorhergehenden Ansprüche, **dadurch gekennzeichnet, dass** der Hohlraum (32) eine allgemein gekrümmte und glatte Hohlraumwand aufweist, und wobei der Hohlraum (32) vorzugsweise eine Form aufweist, die mindestens eine Tränen-, Ellipsoid-, runde, sphärische, abgeplattete Sphäroid-, gestreckte Sphäroid-, Hufeisen-, Trapez- oder gerundete Form ist.

5. Schuhabsatz (40) nach einem der vorhergehenden Ansprüche, der eine Einfassung (48) umfasst, die eine starre oder halbstarre Wand zum Schutz des Aufbewahrungshohlraums (32) und jedes in dem Hohlraum (32) aufbewahrten Gegenstandes aufweist.

6. Schuhabsatz (40) nach einem der vorhergehenden Ansprüche, **dadurch gekennzeichnet, dass** die Abdeckung (50) eine kraftdämpfende Schicht umfasst, um jeglichen Aufprall zu dämpfen, der von der Abdeckung (50) aufgenommen wird, während sie von einem Träger getragen wird und wobei die kraftdämpfende Schicht bei Gebrauch vorzugsweise für die Kalibrierung der Kraft verwendet wird, die verwendet wird, um Energie durch eine Stromversorgungsvorrichtung zu erzeugen.

7. Schuhabsatz (40) nach einem der vorhergehenden Ansprüche, die Polstermaterial (53) umfasst, das in dem Hohlraum (32) vorgesehen ist, um einen Gegenstand darin aufzunehmen, wobei das Polstermaterial (53) vorzugsweise eine Polsteröffnung zur Aufnahme des Gegenstandes innerhalb des Polstermaterials (53) aufweist.

8. Schuhabsatz (40) nach einem der vorhergehenden Ansprüche, **dadurch gekennzeichnet, dass** die Zugriffsöffnung (52) innerhalb des Schuhs (36) unterhalb eines Fußbettes oder Fußbettabschnitts vorgesehen ist, wobei das Fußbett oder der Fußbettabschnitt einen Rückfaltknick oder einen Ausschnitt aufweist, um Zugriff auf die Abdeckung bereitzustellen.

9. Schuhabsatz (40) nach einem der vorhergehenden Ansprüche, **dadurch gekennzeichnet, dass** die Abdeckung (50) ein Schloss umfasst, um ein unbefugtes Entfernen der Abdeckung zum Abdecken der Zugriffsöffnung zu verhindern, und wobei das Schloss vorzugsweise ein lösbares Schloss ist, um Zugriff zu der Zugriffsöffnung (52) durch Entfernen der Abdeckung (50) bereitzustellen.

10. Schuhabsatz (40) nach einem der vorhergehenden Ansprüche, **dadurch gekennzeichnet, dass** der Hohlraum (32) ein Hohlraumelement umfasst, das eine Stromversorgungsvorrichtung (26) und eine drahtlose Stromübertragungsvorrichtung (28) zur Verwendung mit mindestens einer tragbaren Technologievorrichtung (22/24), einer implantierbaren Technologievorrichtung und einer Nahfeld-/Näherungstechnologievorrichtung aufweist, wobei die drahtlose Stromübertragungsvorrichtung (28) drahtlos Energie von der Stromversorgung (26) an jede tragbare Technologievorrichtung (22/24), implantierbare Technologievorrichtung und Nahfeld-/Näherungstechnologievorrichtung überträgt, um jede tragbare Technologievorrichtung (22/24), implantierbare Technologievorrichtung und Nahfeld-/Näherungstechnologievorrichtung mit Strom zu versorgen.

11. Schuhabsatz (40) nach Anspruch 10, **dadurch gekennzeichnet, dass** die Stromversorgungsvorrichtung (26) eine Energieerzeugungsvorrichtung und eine Energiespeichervorrichtung umfasst, und wobei die elektronischen Komponenten der Stromversorgungsvorrichtung (26) und/oder der drahtlosen Stromübertragungsvorrichtung (28) vorzugsweise in der Einfassung (48) eingebettet sind und wobei das Auftreten des Absatzes (40), beispielsweise wenn der Schuh (36) getragen wird, vorzugsweise Energie in der Stromversorgungsvorrichtung (26) erzeugt.

12. Paar Schuhabsätze, das jeden Absatz (40) des Paars Schuhabsätze gemäß einem der vorhergehenden Ansprüche umfasst, wobei ein erster Absatz des Paars Absätze einem Schuh für einen linken Fuß zugeordnet ist und ein zweiter Absatz des Paars Absätze einem Schuh für einen rechten Fuß zugeordnet ist, wobei der Hohlraum (32), der in jedem Absatz (40) vorgesehen ist, vorzugsweise eine Stromversorgungsvorrichtung (26) und eine drahtlose Stromübertragungsvorrichtung (28) umfasst, wobei die Stromversorgungsvorrichtung (26) und die drahtlose Stromübertragungsvorrichtung (28) eines Absatzes (40) als primäre Stromversorgungsvorrichtung und drahtlose Stromübertragungsvorrichtung bezeichnet werden, und wobei die Stromversorgungsvorrichtung (26) und die drahtlose Stromübertragungsvorrichtung (28) des anderen Absatzes (40) als Not-Stromversorgungs- und drahtlose Übertragungsvorrichtung zur Verwendung bei Ausfall einer oder beider primären Stromversorgungs- und drahtlosen Stromübertragungsvorrichtungen bezeichnet werden.

13. Verfahren zur Herstellung eines Schuhabsatzes (40), das folgende Schritte umfasst:
Bereitstellen mindestens einer Einfassung (48) und einer Leiste innerhalb einer Schuhabsatzform und einer Schuhsohlenform;
Hinzufügen eines Absatzmaterials in flüssiger Form in die Form um mindestens die Einfassung (48) oder die Leiste, um einen Aufbewahrungshohlraum (32) zum Aufbewahren eines Gegenstands innerhalb des Absatzes (40) zu bilden;
wobei der Hohlraum (32) eine Zugriffsöffnung (52) umfasst, die Zugriff zu dem Aufbewahrungshohlraum (32) durch das Innere eines zugehörigen Schuhs (36) bereitstellt; und
Bereitstellen einer entfernbaren Abdeckung (50) unter jedem Fußbett, das in dem Schuh vorgesehen oder diesem zugeordnet ist, zum Abdecken der Zugriffsöffnung (52), wobei die Abdeckung (50) verformbar ist, so dass eine Verformung der Abdeckung (50) durch einen Träger beim Tragen des Schuhs (36) einen Gegenstand verformt oder betätigt, der in dem Hohlraum (32) aufbewahrt ist,

14. Verfahren zur Herstellung eines Schuhabsatzes (40) nach Anspruch 13, wobei die Einfassung (48) oder die Leiste eine integrierte Barriere umfasst, die verhindert, dass das Absatzmaterial während des Schritts des Hinzufügens des Absatzmaterials in flüssiger Form zu der Form in ein Obermaterial eines zugehörigen Schuhs (36) fließt, und wobei der Schritt des Hinzufügens eines Materials zu einer Schuhabsatzform und einer Schuhsohlenform um die Einfassung oder die Leiste vorzugsweise mit Hilfe von Direkteinspritz-, Gesamtform-, Gussform-, Gieß- oder Vulkanisierprozessen vorgenommen wird.

15. Verfahren zur Herstellung eines Schuhabsatzes (40) nach Anspruch 14, **dadurch gekennzeichnet, dass** das Verfahren eines von Folgendem verwendet:
eine Einfassung (48), wobei die Barriere um einen oberen peripheren Bereich der Einfassung (48) herum vorgesehen ist, wobei das Verfahren ferner umfasst, dass die Barriere eng in, über oder unter einer Einlegesohlenschicht des Schuhs (36) angebracht wird, und
eine Leiste, wobei die Barriere um die Leiste gebildet wird.

## Revendications

1. Talon de chaussure moulé (40), incluant :
une cavité de stockage (32) à l'intérieur du talon (40), la cavité (32) étant prévue pour stocker un article ;
la cavité (32) incluant une ouverture d'accès (52) fournissant un accès à la cavité de stockage (32) à travers l'intérieur d'un article chaussant associé (36) ;
un couvercle amovible (50) pour couvrir l'ouverture d'accès (52) ; le couvercle (50) étant déformable, de telle sorte que la déformation du couvercle (50) par un porteur lorsqu'il porte la chaussure (36) déforme ou actionne un article stocké à l'intérieur de la cavité (32),
**caractérisé en ce que** ledit couvercle amovible (50) est prévu en dessous d'une quelconque assise plantaire prévue dans, ou associée à, l'article chaussant.

2. Talon de chaussure (40) selon la revendication 1, **caractérisé en ce que** le talon (40) est intégré dans une semelle de chaussure (34), semelle intercalaire (42) ou semelle extérieure (44), et de préférence le talon fait partie d'un article chaussant (36).

3. Talon de chaussure (40) selon l'une quelconque des revendications précédentes, **caractérisé en ce que** l'ouverture d'accès (52) inclut une région de lèvre évidée (54) pour recevoir une région de bord périphérique du couvercle (50), la région de lèvre (54) étant suffisamment évidée pour recevoir le couvercle (50) dans une configuration au moins sensiblement alignée à l'intérieur de la région de lèvre (54), et de préférence le couvercle (50) est reçu à l'intérieur de la région de lèvre évidée (54) avec une ajustement à frottement ou ajustement à vis.

4. Talon de chaussure (40) selon l'une quelconque des revendications précédentes, **caractérisé en ce que** la cavité (32) inclut une paroi généralement incurvée et lisse, et dans lequel la cavité (32) présente de préférence une forme au moins approximant l'une d'une forme de gouttelette, ellipsoïde, obronde, sphérique, sphéroïde aplatie, sphéroïde allongée, de fer à cheval, de trapèze ou arrondie.

5. Talon de chaussure (40) selon l'une quelconque des revendications précédentes, incluant une bordure (48) possédant une paroi rigide ou semi-rigide pour protéger la cavité de stockage (32) et un quelconque article stocké à l'intérieur de la cavité (32).

6. Talon de chaussure (40) selon l'une quelconque des revendications précédentes, **caractérisé en ce que** le couvercle (50) inclut une couche d'amortissement de force pour amortir un quelconque impact reçu par le couvercle (50) lorsqu'il est porté par un porteur et durant l'utilisation, la couche d'amortissement de force est de préférence utilisée dans l'étalonnage de force utilisé pour générer de l'énergie par l'intermédiaire d'un dispositif d'alimentation électrique.

7. Talon de chaussure (40) selon l'une quelconque des revendications précédentes, incluant un matériau de matelassage (53) prévu dans la cavité (32) pour recevoir un article dans celui-ci, le matériau de matelassage (53) possédant de préférence une ouverture de matelassage pour recevoir l'article à l'intérieur du matériau de matelassage (53).

8. Talon de chaussure (40) selon l'une quelconque des revendications précédentes, **caractérisé en ce que** l'ouverture d'accès (52) est prévue à l'intérieur de la chaussure (36) en dessous d'une assise plantaire ou portion d'assise plantaire, l'assise plantaire ou portion d'assise plantaire incluant l'un d'un repli et d'une section découpée pour fournir un accès au couvercle.

9. Talon de chaussure (40) selon l'une quelconque des revendications précédentes, **caractérisé en ce que** le couvercle (50) inclut un verrou pour empêcher l'enlèvement non autorisé du couvercle pour couvrir l'ouverture d'accès, et le verrou est de préférence un verrou libérable pour fournir un accès à l'ouverture d'accès (52) en enlevant le couvercle (50).

10. Talon de chaussure (40) selon l'une quelconque des revendications précédentes, **caractérisé en ce que** la cavité (32) inclut un article de cavité possédant un dispositif d'alimentation électrique (26) et un dispositif de transmission d'électricité sans fil (28) pour l'utilisation avec au moins l'un d'un dispositif de technologie portable (22/24), d'un dispositif de technologie implantable et d'un dispositif de technologie de champ proche/proximité, dans l'utilisation, le dispositif de transmission d'électricité sans fil (28) transmet sans fil de l'énergie de l'alimentation électrique (26) à chaque dispositif de technologie portable (22/24), dispositif de technologie implantable et dispositif de technologie de champ proche/proximité afin d'alimenter chaque dispositif de technologie portable (22/24), dispositif de technologie implantable et dispositif de technologie de champ proche/proximité.

11. Talon de chaussure (40) selon la revendication 10, **caractérisé en ce que** le dispositif d'alimentation électrique (26) inclut un dispositif de génération d'énergie et un dispositif de stockage d'énergie, et des composants électroniques d'au moins l'un du dispositif d'alimentation électrique (26) et du dispositif de transmission d'électricité sans fil (28) sont de préférence encastrés à l'intérieur de la bordure (48), et dans lequel l'impact du talon (40), par exemple lorsque l'article chaussant (36) est porté, génère de préférence de l'énergie dans le dispositif d'alimentation électrique (26).

12. Paire de talons de chaussure, chaque talon (40) de la paire de talons de chaussure étant selon l'une quelconque des revendications précédentes, un premier talon de la paire de talons étant associé à un article chaussant pour un pied gauche, et un second talon de la paire de talons étant associé à un article chaussant pour un pied droit, la cavité (32) prévue dans chaque talon (40) incluant de préférence un dispositif d'alimentation électrique (26) et un dispositif de transmission d'électricité sans fil (28), le dispositif d'alimentation électrique (26) et le dispositif de transmission d'électricité sans fil (28) d'un talon (40) étant désigné en tant que dispositif d'alimentation électrique et dispositif de transmission d'électricité sans fil primaires, et le dispositif d'alimentation électrique (26) et le dispositif de transmission d'électricité sans fil (28) de l'autre talon (40) étant désignés en tant que dispositif d'alimentation électrique et de transmission sans fil de secours pour l'utilisation dans le cas de la panne de l'un ou des deux du dispositif d'alimentation électrique et du dispositif de transmission d'électricité sans fil primaires.

13. Procédé de fabrication d'un talon de chaussure (40), incluant les étapes de :
la fourniture d'au moins l'une d'une bordure (48) et d'une forme à l'intérieur de l'un d'un moule de talon de chaussure et d'un moule de semelle de chaussure ;
l'ajout d'un matériau de talon à l'état fluide dans le moule autour d'au moins l'une de la bordure (48) et de la forme pour former une cavité de stockage (32) pour stocker un article à l'intérieur du talon (40) ;
la cavité (32) étant formée avec une ouverture d'accès (52) pour fournir un accès à la cavité de stockage (32) à travers l'intérieur d'un article chaussant associé (36) ; et
la fourniture d'un couvercle amovible (50) en dessous d'une quelconque assise plantaire prévue dans, ou associée à, l'article chaussant pour couvrir l'ouverture d'accès (52), dans lequel le couvercle (50) est déformable, de telle sorte que la déformation du couvercle (50) par un porteur lorsqu'il porte l'article chaussant (36) déforme ou actionne un article stocké à l'intérieur de la cavité (32).

14. Procédé de fabrication d'un talon de chaussure (40) selon la revendication 13, la bordure (48) ou forme incluant une barrière intégrée empêchant le matériau de talon de s'écouler dans une tige d'un article chaussant associé (36) durant l'étape de l'ajout du matériau de talon à l'état fluide dans le moule, et de préférence l'étape de l'ajout d'un matériau dans l'un d'un moule de talon de chaussure et d'un moule de semelle de chaussure autour de la bordure ou de la forme est entreprise en utilisant l'un d'un processus d'injection directe, moulé en totalité, de coulage, de versement ou de vulcanisation.

15. Procédé de fabrication d'un talon de chaussure (40) selon la revendication 14, **caractérisé en ce que** le procédé utilise l'une de :
une bordure (48), et la barrière est prévue autour d'une région périphérique supérieure de la bordure (48), et le procédé inclut en outre l'ajustement de la barrière de façon serrée à l'intérieur, au-dessus ou en dessous d'une couche de semelle intérieure de l'article chaussant (36), et
une forme, et la barrière est formée autour de la forme.
